# EUROPÄISCHE PATENTSCHRIFT

(11) **EP 1 521 979 B1**
(45) Veröffentlichungstag und Bekanntmachung des Hinweises auf die Patenterteilung: **09.05.2007**
(21) Anmeldenummer: 03732524.8
(22) Anmeldetag: 04.06.2003
(51) Int. Cl.: G01S 13/72, G01S 13/87, G01S 13/86

(54) **VERFAHREN ZUR BEOBACHTUNG EINER VIELZAHL VON OBJEKTEN**
METHOD FOR THE OBSERVATION OF A NUMBER OF OBJECTS
PROCEDE D'OBSERVATION D'UNE PLURALITE D'OBJETS

(30) Priorität: 13.07.2002 DE 10231712
(43) Veröffentlichungstag der Anmeldung: 13.04.2005
(73) Patentinhaber: ATLAS ELEKTRONIK GMBH, D-28305 Bremen (DE)
(72) Erfinder: BÜMMERSTEDE, Jörg, 28876 Oyten (DE)
(86) Internationale Anmeldenummer: PCT/EP2003/005837
(87) Internationale Veröffentlichungsnummer: WO 2004/008173

(56) Entgegenhaltungen:
- US-A- 5 365 236
- US-A- 5 414 643
- M. BRUNET, M. ADELANTADO: "Multisensor Multitarget Tracking for Airport Simulation" IASTED INT. CONF. ON APPLIED SIMULATION AND MODELLING , 25. - 28. Juni 2002, Seiten 1-5, XP002252729 Crete, Greece
- ASSEO S J: "Integration of active and passive track files from internetted aircraft for enhanced situation awareness" PROCEEDINGS OF THE IEEE 1988 NATIONAL AEROSPACE AND ELECTRONICS CONFERENCE: NAECON 1988 (CAT. NO.88CH2596-5), DAYTON, OH, USA, 23-27 MAY 1988, Seiten 242-250 vol.1, XP010076898 1988, New York, NY, USA, IEEE, USA

## Beschreibung

Die Erfindung betrifft ein Verfahren zur Beobachtung einer Vielzahl von Objekten, die sich in einem von mehreren Sensoren überwachten Raum bewegen, der im Oberbegriff des Anspruchs 1 definierten Gattung.

Schwimmende Plattformen, wie Oberflächenschiffe, sind zur Aufklärung und Überwachung sowohl des Seegebiets um die Plattform als auch des Luftraums über der Plattform mit einer Vielzahl von unterschiedlichen Sensoren ausgestattet, die von aufgefaßten Objekten Meßergebnisse als sog. Tracks liefern und diese fortwährend in Zeitintervallen aktualisieren, was als Aufdatierung der Tracks bezeichnet wird. Beispiele für solche Sensoren sind Navigationsradare, Überwachungsradare für Fern- und Nahbereich, elektrooptische Geräte mit Laserentfernungsmessung, etc. Unter einem Track wird ein Satz von Objektdaten verstanden, der die Position und den Geschwindigkeitsvektor, die sog. Kinematik, des Objekts, sowie Klassifikations-Attribute des Objekts angibt.

Zur Beobachtung des Verhaltens der einzelnen Objekte müssen die Tracks der einzelnen Sensoren, die sog. Sensortracks, zusammengeführt und in einem den Überwachungsraum kartographisch erfassenden Lageplan einem Operateur möglichst übersichtlich angezeigt werden. Hierzu werden in dem eingangs genannten Verfahren, die Tracks der verschiedenen Sensoren, also die Sensortracks, insoweit sie dasselbe Objekt betreffen, einem Systemtrack zugeordnet werden, der die Darstellung des Objekts im Lageplan bestimmt.

Bei einem bekannten Verfahren dieser Art (M. Brunet und M. Adelantado "Mulitsensor Multitarget Tracking for Airport Simulation" IASTED INT. CONF. ON APPLIED SIMULATION AND MODELLING, 25. - 28. Juni 2002, Seiten 1-5, XP002252729 Crete, Greece) werden Sensortracks, die von verschiedenen Sensoren geliefert werden, in sog. Cluster aufgeteilt, wobei jeder Cluster einem aufgefassten und verfolgten Objekt zugehörig ist. Bei der anfänglichen Trackfusion erfolgt ein paarweiser Vergleich der Sensortracks. Für Sensortracks, die nicht einem vorhandenen Cluster zugeordnet werden können, wird ein neuer Cluster angelegt.

Bei den bekannten Verfahren wird also immer eine eindeutige Zuordnungsentscheidung (positiv oder negativ) getroffen und die Gültigkeit der Entscheidungen entweder in festen Zeitintervallen oder bei Aufdatierung der Sensortracks überprüft. Die Zahl der Rechenoperationen wächst dabei quadratisch mit der Anzahl der vorhandenen Sensortracks, so daß bei einer Vielzahl von gleichzeitig erfaßten Objekten, z.B. 1000 Objekte, eine erhebliche Rechnerkapazität benötigt wird, die für andere Zwecke nicht mehr verfügbar ist.

Der Erfindung liegt die Aufgabe zugrunde, ein Verfahren der eingangs genannten Art dahingehend zu verbessern, daß die Zuordnungsentscheidung besonders effizient, sicher und weitgehend vollautomatisch, also ohne Eingriff des Operateurs, getroffen wird, und daß es zur gleichzeitigen Behandlung einer großen Anzahl von Objekten bei reduzierter Anforderung an die Rechnerkapazität geeignet ist.

Die Aufgabe ist erfindungsgemäß durch die Merkmale im Anspruch 1 gelöst.

Das erfindungsgemäße Verfahren hat den Vorteil, daß es selbst bei einer Vielzahl von gleichzeitig verfolgten Objekten eine übersichtliche Lagedarstellung ermöglicht, wenig Rechnerkapazität benötigt und die zu den einzelnen Objekten zugehörigen Sensortracks mit geringer Fehlerwahrscheinlichkeit sicher erfaßt, da nur sichere Entscheidungen getroffen werden. Dementsprechend werden physikalische Unbestimmtheiten akzeptiert und dargestellt bis eine sichere Entscheidung getroffen werden kann. Z.B. wird ein Sensortrack solange zu einem Systemtrack oder mehreren Systemtracks zugehörig betrachtet, solange keine sichere Entscheidung "Nichtzugehörigkeit" getroffen werden kann, anders ausgedrückt, seine Zugehörigkeit nicht sicher ausgeschlossen werden kann. Diese Entscheidung ist zumindest im automatischen Entscheidungsablauf irreversibel und kann nur - wenn gewünscht - durch mannuellen Eingriff des Operateurs revidiert werden. Die Schwellen für die Entscheidung "Nichtzugehörigkeit" werden so gesetzt, daß sich eine erwünschte Balance zwischen hoher Effizienz und geringer Fehlerwahrscheinlichkeit einstellt. Vorteilhaft wird die Entscheidungschwelle so gelegt, daß sie in etwa dem Auflösungsvermögen der Sensoren entspricht, die den jeweiligen Sensortrack und Systemtrack anliefern. Diese Vorgehensweise hat den Vorteil, daß beispielsweise Objekte, die von Sensoren aufgrund deren beschränkten Auflösungsvermögen nicht getrennt werden können, solange als ein Objekt angesehen werden, bis sie im Laufe der Zeit durch Änderung der Bewegungsbahn oder nach Auffassung durch einen höher auflösenden Sensor sicher unterschieden werden können. Dann erst werden die Objekte getrennt und durch separate Systemtracks ausgewiesen. Diese separaten Systemtracks bleiben unwiderruflich bestehen, auch wenn die Objekte sich evtl. später über einen längeren Zeitraum parallel zueinander bewegen und dadurch ggf. nicht mehr aufgelöst werden können. Da bei der fortlaufenden Überprüfung des Fortbestands der Zugehörigkeit der zugeordneten Sensortracks zu Systemtracks, diese immer nur mit den Systemtracks, denen sie zugeordnet sind, verglichen werden und nicht mit den anderen Systemtracks, zu denen keine Zuordnung besteht, wächst die Anzahl der Rechenoperationen nur linear mit der Anzahl der Tracks, so dass die erforderliche Rechenkapazität sich in Grenzen hält. Mit dem erfindungsgemäßen Verfahren können bis zu 1000 Objekte und mehr gleichzeitig beobachtet werden und dabei dem Operateur eine "aufgeräumte Lage" sichtbar gemacht werden, in der die Objekte noch gut erkannt und verfolgt werden können.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Ausführungsform der Erfindung wird in jedem Systemtrack einer der Sensortracks als führender Sensortrack, als sog. Primer, und die anderen Sensortracks als nachgeordnete Sensortracks deklariert. Ein neu auftretender Sensortrack sowie ein aktualisierter Sensortrack, der nicht führender, also nachgeordneter Sensortrack ist, wird ausschließlich mit dem führenden Sensortrack der Systemtracks verglichen. Durch diese Maßnahme wird die benötigte Rechnerkapazität für die durchzuführenden Rechenoperationen gering gehalten.

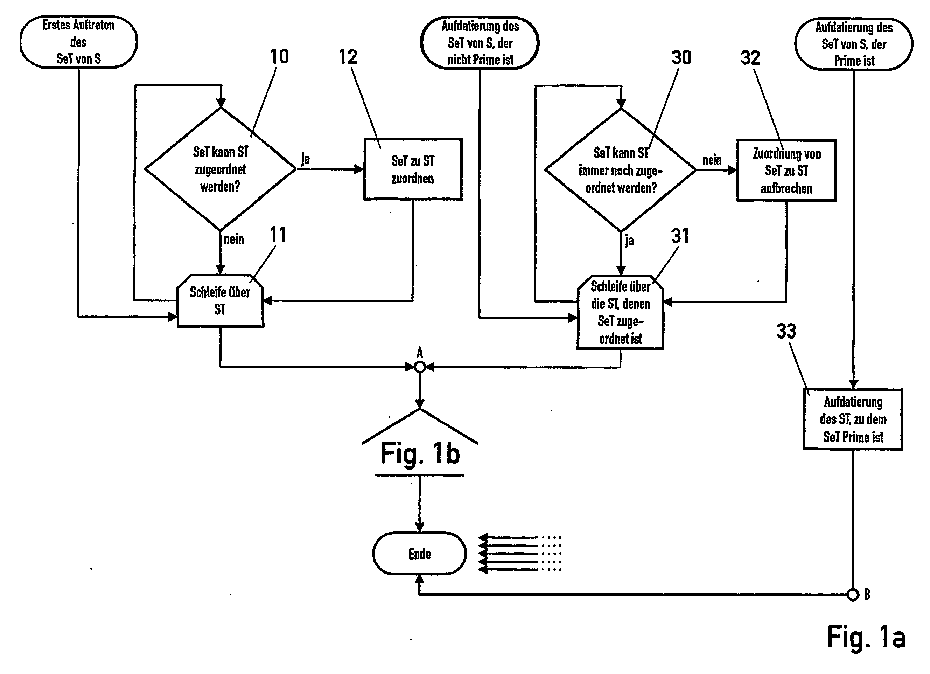

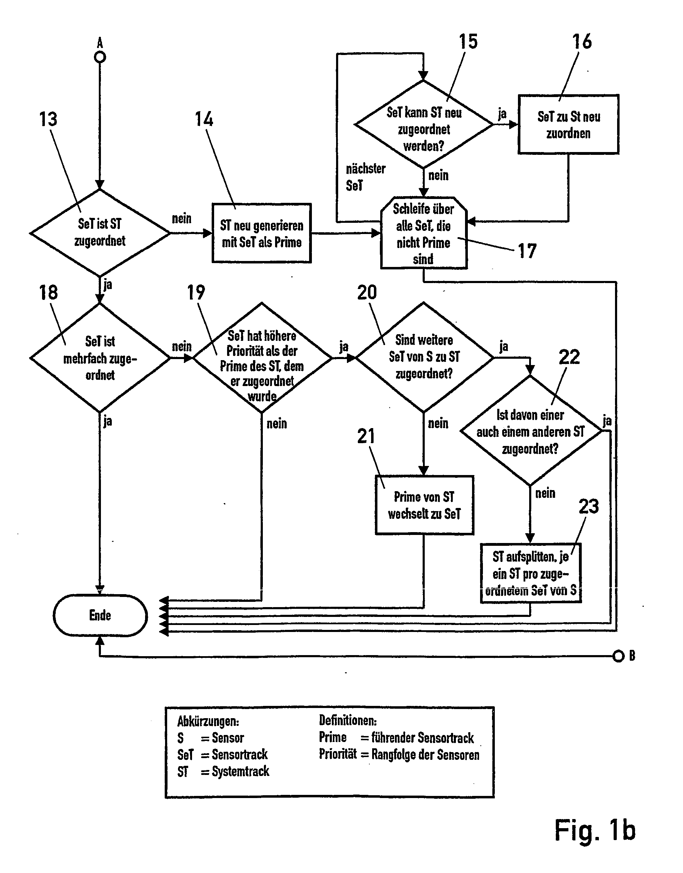

Die Erfindung ist anhand eines in der Zeichnung illustrierten Ausführungsbeispiels im folgenden näher beschrieben. Dabei zeigt die Zeichnung ein in Fig. 1a und 1b aufgeteiltes Flußdiagramm zur Erläuterung des Verfahrens.

Das nachfolgend beschriebene Verfahren zur Beobachtung einer Vielzahl von Objekten, die sich in einem von mehreren Sensoren überwachten Raum bewegen, setzt voraus, daß die Objekte von den Sensoren aufgefaßt, von den aufgefaßten Objekten Sensortracks erstellt und die Objekte von den Sensoren unter fortlaufender Aktualisierung der Sensortracks, auch Aufdatierung genannt, verfolgt werden. Unter einem Sensortrack wird ein Datensatz verstanden, der das Objekt bezüglich seiner Kinematik, das sind seine Position sowie Geschwindigkeit und Richtung seiner Bewegung, und ihm eigene Klassifikations-Attribute identifiziert. Die von einem Sensor angelieferten Sensortracks sind mit einer eindeutigen Identifizierung und mit einer den Sensor ausweisenden Kennung versehen. Wird ein neues Objekt durch einen Sensor aufgefaßt, so wird der von diesem Objekt generierte Sensortrack mit einer noch nicht benutzten Identifizierung, z.B. mit einer aufsteigenden Numerierung aller Sensortracks, durch den Sensor versehen. Verliert der Sensor den Kontakt zu einem Objekt, so wird der Sensortrack mit seiner Identifizierung abgemeldet. Als Sensoren werden üblicherweise verschiedene Radare, vorzugsweise mit unterschiedlichem Auflösungsvermögen, wie Fern- und Nahbereichsradar, und elektrooptische Geräte, wie z.B. Tag- und Nachtsichtsensoren mit Laserentfernungsmesser, verwendet.

Die Vielzahl der von den verschiedenen Sensoren angelieferten Sensortracks wird zwecks übersichtlicher Darstellung der Lage der verschiedenen Objekte dadurch bereinigt, daß Sensortracks von verschiedenen Sensoren, die von demselben Objekt stammen, erfindungsgemäß zusammengefaßt werden und nur noch einen einzigen Track ergeben, der im folgenden Systemtrack genannt wird und die Darstellung des Objekts in einem Lageplan des überwachten Raums bestimmt. Das hierzu angewendete, nachstehend beschriebene Verfahren erfolgt vollautomatisch, nimmt alle nicht ausschließbaren Zuordnungen vor und ermöglicht die gleichzeitige Behandlung einer Vielzahl von Objekten, ohne hierzu eine extrem große Rechnerkapazität für die Durchführung der notwendigen Operationen zu benötigen.

In diesem in Fig. 1a und 1b mittels eines Flußdiagramms illustrierten Verfahren wird eine Zuordnung eines Sensortrack zu mindestens einem Systemtrack immer dann vorgenommen, wenn eine Entscheidung, daß der Sensortrack nicht demselben, vom Systemtrack repräsentierten Objekt zugehörig ist, nicht sicher getroffen werden kann. Die Schwellen für diese Entscheidung werden so gesetzt, daß sich eine geringe Fehlerwahrscheinlichkeit einstellt, was bedeutet, daß keine möglichen Zuordnungen weggelassen werden. Vorzugsweise wird die Schwelle jeweils an das Auflösungsvermögen der beiden Sensoren angepaßt, die den Sensortrack und den führenden Sensortrack des Systemtrack, mit dem die Zuordnung geprüft wird, anliefern. Die Zahl der Zuordnungen wird dennoch in der Regel überschaubar bleiben, weil die Abstände von Objekten gewöhnlich größer als das Auflösungsvermögen der Sensoren ist. Mit der Festlegung von Schwellen wird eine hohe Effizienz erreicht, da die Entscheidungen über das Ausschließen einer Zuordnung zu einem Systemtrack nicht revidiert werden muß. Eine Revision der irreversiblen Entscheidung der Nichtzugehörigkeit kann insofern vorgesehen werden, als dem Operateur hierzu ein manueller Eingriff ermöglicht wird.

Zugeordnete Sensortracks werden fortlaufend auf ihre Zughörigkeit zu den zugeordneten Systemtracks überprüft und bei Feststellung der Nichtzugehörigkeit von dem jeweiligen Systemtrack abgespalten. Dabei wird ein aktualisierter Sensortrack nur mit den zugeordneten Systemtracks auf Zugehörigkeit geprüft, während ein neu auftretender Sensortrack notwendigerweise mit allen Systemtracks abgeglichen wird. Mit jedem Sensortrack, dessen Nichtzugehörigkeit zu jedem Systemtrack festgestellt wird, sei es gleich anfänglich beim Neuauftreten des Sensortracks oder bei der späteren Überprüfung des Sensortracks auf Fortbestand der Zugehörigkeit, was in diesem Fall zur Abspaltung des Sensortracks vom Systemtrack führt, wird ein neuer Systemtrack generiert. Die fortlaufende Überprüfung der Zugehörigkeit eines Sensortrack zu einem Systemtrack wird bei jeder in den einzelnen Sensoren erfolgten Aktualisierung der Sensortracks vorgenommen, so daß jeweils immer der aktualisierte Sensortrack zur Prüfung auf weitere Zugehörigkeit zu dem Systemtrack verwendet wird.

Alle Sensortracks, die einem Systemtrack zugeordnet werden, werden in dem Systemtrack vorgehalten, wobei einer der Sensortracks als führender Sensortrack (Prime) und die anderen Sensortracks als nachgeordnete Sensortracks deklariert werden. Welcher Sensortrack als Prime deklariert wird, richtet sich nach der Rangfolge der Sensoren, die die Sensortracks anliefern.

Während des Verfahrens kann dabei der Prime unter bestimmen Voraussetzungen wechseln. Während bei der Prüfung auf Zugehörigkeit eines neu auftretenden Sensortracks dieser neu auftretende Sensortrack nur mit den führenden Sensortracks, aller Systemtracks verglichen wird, wird ein aktualisierter, nachgeordneter Sensortrack nur jeweils mit dem führenden Sensortrack, des Systemtracks verglichen, dem er zugeordnet ist. Ein aktualisierter bzw. aufdatierter führender Sensortrack (Prime) wird nicht auf Zugehörigkeit geprüft.

Stattdessen werden seine Kinematik und ggf. seine geänderten Attribute auf den Systemtrack übertragen.

In dem Flußdiagramm der Fig. 1a und 1b sind die einzelnen Verfahrensschritte bei der Zuordnungsentscheidung graphisch dargestellt. Die ersten in Fig. 1a illustrierten Verfahrensschritte sind abhängig davon, ob ein Sensortrack eines Sensors erstmals auftritt oder es sich um einen aktualisierten Sensortrack handelt oder ob der aktualisierte Sensortrack Prime ist oder nachgeordnet ist, also in der Rangfolge höchste Priorität oder nachgeordnete Priorität besitzt, und unterscheiden sich insofern voneinander. Ab dem in Fig. 1a mit A gekennzeichneten Punkt sind die weiteren Verfahrensschritte für neue und aktualisierte Sensortracks identisch und folgen dem in Fig. 1b dargestellten weiterführenden Flußdiagramm.

Unter Bezugnahme auf das in Fig. 1a und 1b dargestellt Flußdiagramm sind die einzelnen Verfahrensschritte wie folgt gestaltet:

Wird von einem Sensor ein Sensortrack angeliefert, so ist dieser entsprechend deklariert als ein Sensortrack, der erstmalig auftritt, oder als aktualisierter Sensortrack, der bereits vorhanden ist und zu einem späteren Zeitpunkt erneuert (aufdatiert) worden ist. Der aktualisierte Sensortrack stellt eine Aufdatierung eines schon bekannten Sensortracks dar. Bei einem aktualisierten bzw. aufdatierten Sensortrack wird unterschieden zwischen einem Sensortrack, der Prime eines Systemtrack ist, und einem Sensortrack, der in einem oder mehreren Systemtracks ein nachgeordneter Sensortrack ist. Ein Sensortrack kann nur Prime eines einzigen Systemtracks sein.

Ein erstmals auftretender, von einem Sensor angelieferter Sensortrack wird im Verfahrensschritt 10 mit allen Systemtracks und in allen Systemtracks wiederum nur mit dem führenden Sensortrack oder Prime auf Zugehörigkeit bzw. Nichtzugehörigkeit geprüft. Der Sensortrack wird als dem Systemtrack zugehörig erkannt, wenn der ihn anliefernde Sensor nicht auch den Prime des Systemtrack liefert, wenn ferner die Kinematik, d.h. Position und Geschwindigkeitsvektor, mit dem Prime des Systemtrack zusammenpaßt und wenn auch die Attribute des Sensortrack und die Attribute des Systemtrack kompatibel sind. Kann auf Basis dieser Prüfungskriterien der Sensortrack dem Systemtrack nicht zugeordnet, also eine Zuordnung sicher ausgeschlossen werden, so wird über die Schleife 11 der nächste Systemtrack zur Zugehörigkeitssprüfung aufgerufen. Wird auf Zugehörigkeit erkannt, kann also eine Zuordnung nicht sicher ausgeschlossen werden, so wird im Verfahrensschritt 12 der Sensortrack dem Systemtrack zugeordnet und in der Schleife 11 ebenfalls der nächste Systemtrack zum Zuordnungsvergleich aufgerufen, da eine Mehrfachzuordnung eines Sensortrack zu verschiedenen Systemtracks möglich ist.

Wie weiter im Flußdiagramm in Fig. 1b verfolgt werden kann, wird im Verfahrensschritt 13 geprüft, ob der neue Sensortrack einem Systemtrack zugeordnet wurde. Ist dies nicht der Fall, so wird im Verfahrensschritt 14 mit dem neuen Sensortrack ein neuer Systemtrack generiert, in dem der neue Sensortrack Prime ist. Im nächsten Verfahrensschritt 15 werden alle vorhandenen Sensortracks, die nicht Prime sondern nachgeordnete Sensortracks sind, mit dem neuen Systemtrack dahingehend verglichen, ob sie diesem zugeordnet werden können. Die Zuordnungskriterien sind die gleichen wie vorstehend beschrieben. Kann der aufgerufene Sensortrack dem neuen Systemtrack zugeordnet werden, so wird im Schritt 16 der Sensortrack dem neuen Systemtrack zugeordnet. Die bereits bestehende Zuordnung des Sensortrack zu seinem Systemtrack bleibt erhalten. Über die Schleife 17 wird dann der nächste Sensortrack, der nicht Prime ist, zum Vergleich aufgerufen. Kann ein Sensortrack dem neuen Systemtrack nicht zugeordnet werden, so wird über die Schleife 17 ebenfalls der nächste Sensortrack, der nicht Prime ist, zum Vergleich mit dem neuen Systemtrack aufgerufen.

Wird im Verfahrensschritt 13 festgestellt, daß der neue Sensortrack einem Systemtrack zugeordnet ist, so wird im Verfahrensschritt 18 geprüft, ob eine Mehrfachzuordnung besteht. Ist dies der Fall, so wird weiter nichts veranlaßt. Ist der neue Sensortrack jedoch nur einem einzigen Systemtrack zugeordnet, so wird im Verfahrensschritt 19 geprüft, ob der neue Sensortrack eine höhere Priorität als der Prime des Systemtracks hat, dem er zugeordnet wurde. Wie bereits erwähnt, leitet sich die höhere Priorität von der Priorität des Sensors in der Rangfolge der Sensoren ab, der den neuen Sensortrack anliefert. Hat der neue Sensortrack keine höhere Priorität, so wird nichts weiter veranlaßt. Hat er eine höhere Priorität, so wird im Verfahrensschritt 20 untersucht, ob weitere Sensortracks des gleichen Sensors dem Systemtrack zugeordnet sind. Ist dies nicht der Fall, so wird die Führungsfunktion des Prime des Sensortracks auf den dem Systemtrack zugeordneten neuen Sensortrack übertragen, der damit Prime des Systemtracks wird. Führt die Prüfung dazu, daß weitere Sensortracks des gleichen Sensors dem Systemtrack zugeordnet sind, so wird im Verfahrensschritt 22 untersucht, ob einer der weiteren Sensortracks des gleichen Sensors auch einem anderen Systemtrack zugeordnet ist. Ist dies nicht der Fall, so wird im nachfolgenden Verfahrensschritt 23 der Systemtrack aufgesplittet, wobei je ein Systemtrack pro zugeordnetem Sensortrack des gleichen Sensors entsteht.

Bei der Aufdatierung von Sensortracks von Sensoren, die nicht Prime sind, also in der Rangfolge der Sensoren dem Prime nachgeordnet sind, werden folgende Verfahrensschritte durchgeführt:

In einer Verfahrensstufe 30 wird ein aktualisierter Sensortrack mit dem Prime derjenigen Systemtracks auf Zugehörigkeit geprüft, denen er zugeordnet ist. Wird festgestellt, daß die Zugehörigkeit immer noch gegeben ist, so wird über die Schleife 31 der nächste Systemtrack, dem der aktualisierte Sensortrack zugeordnet ist, aufgerufen und der Verfahrensschritt 30 wiederholt. Ergibt der Verfahrensschritt 30, daß eine Zuordnung des aktualisierten Sensortrack zu dem Systemtrack nicht mehr aufrecht erhalten werden kann, so wird die Zuordnung im Verfahrensschritt 32 aufgehoben, und der Sensortrack abgespalten, wonach wiederum über die Schleife 31 der nächste Systemtrack, dem der aktualisierte Sensortrack zugeordnet ist, zur Überprüfung aufgerufen wird.

Nunmehr wird für den abgespalteten, aktualisierten Sensortrack in gleicher Weise wie für den neu auftretenden Sensortrack in dem Verfahrensschritt 13 geprüft, ob der Sensortrack weiterhin einem Systemtrack zugeordnet ist oder nicht, so daß sich an diese Prüfung einerseits die weiteren Verfahrensschritte 14 - 17 und andererseits die weiteren Verfahrensschritte 18 - 23 anschließen, so wie dies vorstehend beschrieben worden ist.

Da in dem beschriebenen Verfahren grundsätzlich keine Primes von Systemtracks miteinander auf Zugehörigkeit verglichen werden, erfolgt die Bearbeitung eines aktualisierten oder aufdatierten Sensortrack von einem Sensor, der Prime ist, im Verfahrensschritt 33 in der Weise, daß der aufdatierte Sensortrack den bisherigen Prime mit den neuen Objektdaten überschreibt, den Prime des Systemtracks also aufdatiert, d.h. seine Kinematik und ggf. Attribute auf den Systemtrack überträgt.

## Patentansprüche

1. Verfahren zur Beobachtung einer Vielzahl von Objekten, die in einem von mehreren Sensoren überwachten Raum von den Sensoren erfasst und verfolgt werden,
bei dem aus Objektdaten der aufgefassten Objekte Sensortracks gebildet und die Sensortracks in Zeitintervallen aktualisiert werden und Sensortracks verschiedener Sensoren zu Systemtracks zusammengefasst werden, die die jeweiligen Objekte repräsentieren, **dadurch gekennzeichnet,**
**dass** alle Sensortracks solange als einem oder mehreren Systemtracks zugehörig betrachtet und diesen solange zugeordnet werden und in jedem Systemtrack alle zugeordneten Sensortracks vorgehalten werden, wie eine Entscheidung der Nichtzugehörigkeit zu dem von dem jeweiligen Systemtrack repräsentierten Objekt nicht sicher getroffen werden kann,
**dass** aktualisierte Sensortracks nur mit den Systemtracks verglichen werden, denen sie zugeordnet sind, um sie auf Fortbestand ihrer Zuordnung zu überprüfen, und bei Feststellung der Nichtzugehörigkeit abgespalten werden,
**dass** mit jedem Sensortrack, dessen Nichtzugehörigkeit zu jedem der Systemtracks festgestellt worden ist, ein neuer Systemtrack gebildet wird und
**dass** die Entscheidung der Nichtzugehörigkeit nicht revidiert wird.

2. Verfahren nach Anspruch 1, **dadurch gekennzeichnet, dass** in jedem Systemtrack einer der Sensortracks als führender Sensortrack und die anderen Sensortracks als nachgeordnete Sensortracks deklariert werden und dass mit dem führenden Sensortrack zumindest die Kinematik des Systemtrack bestimmt wird.

3. Verfahren nach Anspruch 2 **dadurch gekennzeichnet, dass** die Deklarierung des führenden Sensortrack und der nachgeordneten Sensortracks aufgrund der Rangfolge der sie anliefernden Sensoren vorgenommen wird.

4. Verfahren nach Anspruch 2 oder 3, **dadurch gekennzeichnet, dass** die Prüfung neu auftretender Sensortracks mit den Systemtracks nur jeweils mit dem führenden Sensortrack der Systemtracks durchgeführt wird.

5. Verfahren nach einem der Ansprüche 2 bis 4, **dadurch gekennzeichnet, dass** die Prüfung des Zuordnungsfortbestands eines aktualisierten Sensortrack, der nachgeordneter Sensortrack ist, nur mit dem führenden Sensortrack der Systemtracks, denen er zugeordnet ist, durchgeführt wird.

6. Verfahren nach einem der Ansprüche 2 bis 5, **dadurch gekennzeichnet, dass** mit einem aktualisierten Sensortrack, der führender Sensortrack ist, der führende Sensortrack des Systemtrack, dem er zugeordnet ist, bezüglich seiner Kinematik und Attribute geändert wird.

7. Verfahren nach einem der Ansprüche 3 bis 6, **dadurch gekennzeichnet, dass** ein nachgeordneter Sensortrack, der nur einem einzigen Systemtrack zugeordnet werden kann, mit dem führenden Sensortrack des Systemtrack bezüglich der Rangfolge der sie anliefernden Sensoren geprüft wird und im Falle eines höheren Rangs des den nachgeordneten Sensortrack anliefernden Sensors die Führerschaft des führenden Sensortrack im Systemtrack zu dem nachgeordneten Sensortrack wechselt, wenn nicht weitere Sensortracks des gleichen Sensors dem Systemtrack zugeordnet sind.

8. Verfahren nach Anspruch 7, **dadurch gekennzeichnet, dass** im Falle, dass weitere Sensortracks des gleichen Sensors dem Systemtrack zugeordnet sind, der Systemtrack aufgespalten und ein neuer Systemtrack pro weiterem zugeordneten Sensortrack des gleichen Sensors generiert wird, wenn nicht einer der weiteren zugeordneten Sensortracks des gleichen Sensors seinerseits einem anderen Systemtrack zugeordnet ist.

9. Verfahren nach einem der Ansprüche 2 bis 8, **dadurch gekennzeichnet, dass** bei einem neu generierten Systemtrack, der nur einen führenden Sensortrack aufweist, alle nachgeordneten Sensortracks der übrigen Systemtracks mit dem neu generierten Systemtrack geprüft und zusätzlich dem neuen Systemtrack zugeordnet werden, wenn die Entscheidung ihrer Nichtzugehörigkeit zu dem neu generierten Systemtrack nicht sicher getroffen werden kann.

10. Verfahren nach einem der Ansprüche 3 bis 9, **dadurch gekennzeichnet, dass** die Entscheidungsschwelle für die Nichtzugehörigkeit eines Sensortrack zu einem Systemtrack in etwa nach dem Auflösungsvermögen des den Sensortrack anliefernden Sensors und dem Auflösungsvermögen des den führenden Sensortrack zum Systemtrack liefernden Sensors bemessen wird.

## Claims

1. Method for observation of a multiplicity of objects which are detected and tracked by a plurality of sensors in an area monitored by the sensors,
in which sensor tracks are formed from object data of the registered objects, the sensor tracks are updated at time intervals and sensor tracks of different sensors are combined to form system tracks which represent the respective objects, **characterized**
**in that** all the sensor tracks are considered to be associated with one or more system tracks and are associated of them and all the associated sensor tracks are held in each system track until a decision concerning the non-association with the object represented by the respective system track can reliably be made,
**in that** updated sensor tracks are compared only with those system tracks with which they are associated in order to check them for the continued existence of their association and are removed when non-association has been determined,
**in that** a new system track is formed using each sensor track whose non-association with any of the system tracks has been determined and
**in that** the decision on non-association is not revised.

2. Method according to Claim 1, **characterized in that**, in each system track, one of the sensor tracks is declared to be the leading sensor track and the other sensor tracks are declared to be secondary sensor tracks and **in that** the leading sensor track is used to determine at least the kinematics of the system track.

3. Method according to Claim 2, **characterized in that** the leading sensor track and the secondary sensor tracks are declared on the basis of the ranking of the sensors supplying them.

4. Method according to Claim 2 or 3, **characterized in that** the practice of checking newly occurring sensor tracks using the system tracks is respectively carried out using only the leading sensor track of the system tracks.

5. Method according to one of Claims 2 to 4, **characterized in that** the continued existence of an association of an updated sensor track, which is the secondary sensor track, is checked using only the leading sensor track of the system tracks with which it has been associated.

6. Method according to one of Claims 2 to 5, **characterized in that** an updated sensor track, which is the leading sensor track, is used to change the kinematics and attributes of the leading sensor track of the system track with which it has been associated.

7. Method according to one of Claims 3 to 6, **characterized in that** a secondary sensor track, which can be associated with only one system track, is checked, with regard to the ranking of the sensors supplying them, using the leading sensor track of the system track and, of the sensor which supplies the secondary sensor track has a higher ranking, the leadership of the leading sensor track in the system track is changed to the secondary sensor track unless further sensor tracks from the same sensor have been associated with the system track.

8. Method according to Claim 7, **characterized in that**, if further sensor tracks from the same sensor have been associated with the system track, the system track is split, and a new system track is produced for each further associated sensor track from the same sensor unless one of the further associated sensor tracks from the same sensor for its part has been associated with another system track.

9. Method according to one of Claims 2 to 8, **characterized in that**, for a newly generated system track which has only one leading sensor track, all secondary sensor tracks of the remaining system tracks are checked using the newly generated system track and are additionally associated with the new system track if the decision regarding their non-association with the newly generated system track cannot be reliably made.

10. Method according to one of Claims 3 to 9, **characterized in that** the decision threshold for the non-association of a sensor track with a system track is calculated, for instance, in accordance with the resolution capability of the sensor supplying the sensor track and the resolution capability of the sensor supplying the leading sensor track to the system track.

## Revendications

1. Procédé pour observer une pluralité d'objets qui sont enregistrés et suivis par plusieurs capteurs dans un espace surveillé par les capteurs, dans lequel des pistes de capteur sont formées à partir de données d'objet des objets enregistrés et les pistes de capteur sont actualisées à des intervalles de temps et des pistes de capteur de différents capteurs sont groupés en pistes de système, qui représentent les objets concernés, **caractérisé**
**en ce que** toutes les pistes de capteur sont considérées comme appartenant à une ou plusieurs pistes de système et sont attribuées à celles-ci et toutes les pistes de capteur attribuées sont mises à disposition dans chaque piste de système aussi longtemps qu'une décision de non-appartenance à l'objet représenté par la piste de système respective ne peut pas être prise de façon sûre,
**en ce que** des pistes de capteur actualisées sont comparées seulement avec les pistes de système auxquelles elles sont attribuées, afin de vérifier le maintien de leur attribution, et sont dissociées en cas de constatation de non-appartenance,
**en ce que**, avec chaque piste de capteur dont la non-appartenance à chacune des pistes de système a été constatée, une nouvelle piste de système est formée et
**en ce que** la décision de non-appartenance n'est pas révisée.

2. Procédé selon la revendication 1, **caractérisé en ce que** dans chaque piste de système, une des pistes de capteur est déclarée comme piste de capteur pilote et les autres pistes de capteur comme pistes de capteur secondaires, et **en ce que** au moins la cinématique de la piste de système est déterminée avec la piste de capteur pilote.

3. Procédé selon la revendication 2, **caractérisé en ce que** la déclaration de la piste de capteur pilote et des pistes de capteur secondaires est effectuée sur la base de l'ordre de succession des capteurs qui les fournissent.

4. Procédé selon la revendication 2 ou 3, **caractérisé en ce que** le contrôle des pistes de capteur nouvellement apparues avec les pistes de système est effectué seulement respectivement avec la piste de capteur pilote des pistes de système.

5. Procédé selon l'une quelconque des revendications 2 à 4, **caractérisé en ce que** le contrôle du maintien de l'attribution d'une piste de capteur actualisée, qui est une piste de capteur secondaire, est effectué seulement avec la piste de capteur pilote des pistes de système auxquelles elle est attribuée.

6. Procédé selon l'une quelconque des revendications 2 à 5, **caractérisé en ce que**, avec une piste de capteur actualisée qui est une piste de capteur pilote, la piste de capteur pilote de la piste de système à laquelle elle est attribuée est modifiée en ce qui concerne sa cinématique et ses attributs.

7. Procédé selon l'une quelconque des revendications 3 à 6, **caractérisé en ce qu'**une piste de capteur secondaire, qui peut être attribuée seulement à une seule piste de système, est contrôlée avec la piste de capteur pilote de la piste de système en ce qui concerne l'ordre de succession des capteurs qui les fournissent et dans le cas d'un rang supérieur du capteur fournissant la piste de capteur secondaire, la première place de la piste de capteur pilote dans la piste de système passe à la piste de capteur secondaire si d'autres pistes de capteur du même capteur ne sont pas attribuées à la piste de système.

8. Procédé selon la revendication 7, **caractérisé en ce que**, dans le cas où d'autres pistes de capteur du même capteur sont attribuées à la piste de système, la piste de système est dissociée et une nouvelle piste de système est générée par autre piste de capteur attribuée du même capteur si l'une des autres pistes de capteur attribuées du même capteur n'est pas attribuée pour sa part à une autre piste de système.

9. Procédé selon l'une quelconque des revendications 2 à 8, **caractérisé en ce que**, dans le cas d'une piste de système nouvellement générée, qui présente seulement une piste de capteur pilote, toutes les pistes de capteur secondaires des pistes de système restantes sont testées avec la piste de système nouvellement générée et sont attribuées en supplément à la nouvelle piste de système si la décision de leur non-appartenance à la piste de système nouvellement générée ne peut pas être prise de façon sûre.

10. Procédé selon l'une quelconque des revendications 3 à 9, **caractérisé en ce que** le seuil de décision pour la non-appartenance d'une piste de capteur à une piste de système est estimé à peu près selon le pouvoir de résolution du capteur fournissant la piste de capteur et le pouvoir de résolution du capteur fournissant la piste de capteur pilote pour la piste de système.
